# EUROPEAN PATENT APPLICATION

(11) **EP 4 775 943 A1**
(43) Date of publication of application: **15.07.2026**
(21) Application number: 24862369.6
(22) Date of filing: 19.04.2024
(51) Int. Cl.: G01L 1/00

(54) **IMAGE PROCESSING DEVICE, IMAGE PROCESSING METHOD, AND IMAGE PROCESSING PROGRAM**

(30) Priority: 06.09.2023 JP 2023144648
(71) Applicant: FUJIFILM Corporation, Tokyo 106-8620 (JP)
(72) Inventor: YAMAZAKI, Yoshiro, Tokyo 106-8620 (JP)
(74) Representative: Parker, Andrew James
(86) International application number: PCT/JP2024/015635
(87) International publication number: WO 2025/052712

(57) **Abstract**

An image processing apparatus acquires information corresponding to a spatial frequency in a captured image obtained by imaging a color-developing member that develops a color with a density distribution according to an amount of applied energy, and derives the amount of energy applied to the color-developing member based on the acquired information for a portion of the captured image where a density is less than a first threshold value.

## Description

### BACKGROUND OF THE INVENTION

### 1. Field of the Invention

The present disclosure relates to an image processing apparatus, an image processing method, and an image processing program.

### 2. Description of the Related Art

In the related art, a technology of measuring the amount of energy using a color-developing member that develops a color based on the amount of applied energy is known. An example of such a color-developing member is PRESCALE (registered trademark) (manufactured by FUJIFILM Corporation) that develops a color according to applied pressure.

JP2008-232665A discloses a technology of converting a density value obtained by reading, with a scanner, a pressure measurement film in which a pressurized portion is colored into a pressure value using a conversion table.

### SUMMARY OF THE INVENTION

In a case of using a color-developing member that develops a color based on the amount of applied energy, in some cases, the amount of energy cannot be accurately derived based on a density in a captured image obtained by imaging the color-developing member, depending on the amount of applied energy.

The present disclosure has been made in view of the above circumstances, and an object thereof is to provide an image processing apparatus, an image processing method, and an image processing program capable of accurately deriving the amount of energy applied to a color-developing member that develops a color based on the amount of applied energy.

According to a first aspect, there is provided an image processing apparatus comprising: at least one processor, in which the processor is configured to acquire information corresponding to a spatial frequency in a captured image obtained by imaging a color-developing member that develops a color with a density distribution according to an amount of applied energy, and derive the amount of energy applied to the color-developing member based on the acquired information for a portion of the captured image where a density is less than a first threshold value.

According to a second aspect, in the image processing apparatus according to the first aspect, the processor is configured to derive, for a portion of the captured image where a density is equal to or greater than a second threshold value that is equal to or greater than the first threshold value, the amount of energy applied to the color-developing member based on the density.

According to a third aspect, in the image processing apparatus according to the second aspect, the second threshold value is greater than the first threshold value, and, for a portion of the captured image where a density is equal to or greater than the first threshold value and less than the second threshold value, the amount of energy applied to the color-developing member is derived by combining a first amount of energy derived based on the acquired information and a second amount of energy derived based on the density.

According to a fourth aspect, in the image processing apparatus according to the third aspect, for the portion of the captured image where the density is equal to or greater than the first threshold value and less than the second threshold value, the first amount of energy and the second amount of energy are combined by weighting the first amount of energy with a weighting coefficient that decreases as the density increases and weighting the second amount of energy with a weighting coefficient that increases as the density increases.

According to a fifth aspect, in the image processing apparatus according to any one of the first to fourth aspects, the information corresponding to the spatial frequency in the captured image is a component of the captured image having a spatial frequency equal to or greater than a certain value.

According to a sixth aspect, there is provided an image processing method executed by a processor of an image processing apparatus, the image processing method comprising: acquiring information corresponding to a spatial frequency in a captured image obtained by imaging a color-developing member that develops a color with a density distribution according to an amount of applied energy; and deriving the amount of energy applied to the color-developing member based on the acquired information for a portion of the captured image where a density is less than a first threshold value.

According to a seventh aspect, there is provided an image processing program for causing a processor of an image processing apparatus to execute: acquiring information corresponding to a spatial frequency in a captured image obtained by imaging a color-developing member that develops a color with a density distribution according to an amount of applied energy; and deriving the amount of energy applied to the color-developing member based on the acquired information for a portion of the captured image where a density is less than a first threshold value.

According to the present disclosure, it is possible to accurately derive the amount of energy applied to a color-developing member that develops a color according to the amount of applied energy.

### BRIEF DESCRIPTION OF THE DRAWINGS

FIG. 1 is a block diagram showing an example of a schematic configuration of a pressure measurement system.
FIG. 2 is a diagram showing an example of a color-developing member.
FIG. 3 is a block diagram showing an example of a hardware configuration of an image processing apparatus.
FIG. 4 is a graph showing an example of a relationship between an applied pressure and a density of a captured image.
FIG. 5 is a diagram showing an example of weighting coefficient data.
FIG. 6 is a block diagram showing an example of a functional configuration of the image processing apparatus.
FIG. 7 is a flowchart showing an example of pressure measurement processing.

### DESCRIPTION OF THE PREFERRED EMBODIMENTS

Hereinafter, an embodiment for carrying out the technology of the present disclosure will be described in detail with reference to the drawings. In the present embodiment, an example will be described in which pressure is employed as energy to be applied to an object. Examples of the object to be pressurized include a plate-shaped metal and a semiconductor wafer.

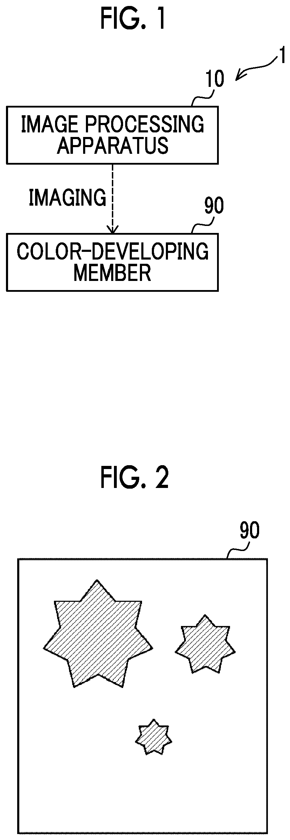

First, a configuration of a pressure measurement system 1 according to the present embodiment will be described with reference to FIG. 1. As shown in FIG. 1, a pressure measurement system 1 includes an image processing apparatus 10. An example of the image processing apparatus 10 is a portable computer such as a smartphone or a tablet terminal. The image processing apparatus 10 may be a stationary computer.

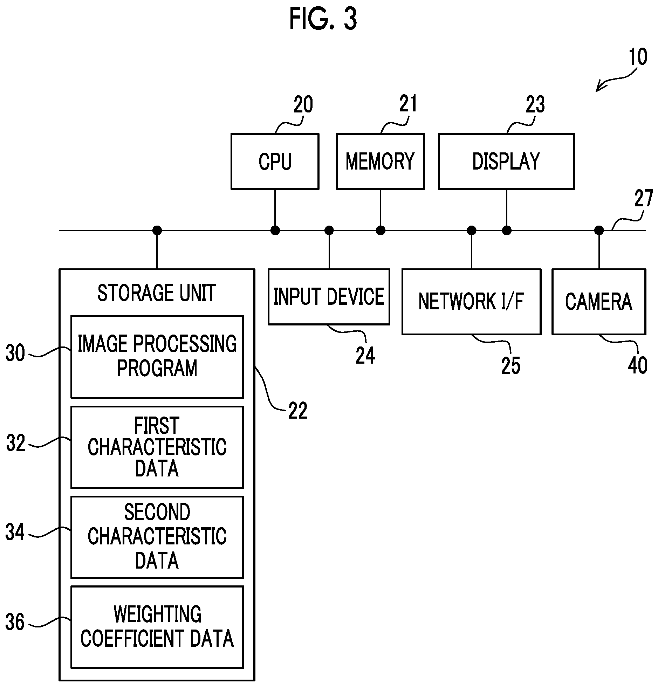

As shown in FIG. 2, in a case where energy (pressure in the present embodiment) is applied, the pressure measurement system 1 measures the amount of energy by using a color-developing member 90 that develops a color with a density distribution according to the amount of applied energy. In the example of FIG. 2, a portion filled with diagonal lines indicates a colored portion. Specifically, the image processing apparatus 10 uses a camera 40 (see FIG. 3) to image the color-developing member 90 in a colored state due to the application of energy, and derives the amount of energy applied to the color-developing member 90 from the image obtained by the capturing (hereinafter, referred to as a "captured image").

As the color-developing member 90, PRESCALE (registered trademark) (manufactured by FUJIFILM Corporation) with which a color optical density corresponding to applied pressure can be obtained can be employed. The PRESCALE is obtained by applying a color former containing microcapsules containing a colorless dye and a color developer to a sheet-like support. In a case where pressure is applied to the PRESCALE, the microcapsules are ruptured, the colorless dye is adsorbed to the color developer, and a color is developed. In addition, since the color former contains a plurality of kinds of microcapsules having different sizes and strengths, the number of microcapsules ruptured is different depending on the applied pressure, and the color optical density is also different. Therefore, with observation of the color optical density, it is possible to measure magnitude of the pressure applied to the PRESCALE, pressure distribution, and the like.

Next, a hardware configuration of the image processing apparatus 10 according to the present embodiment will be described with reference to FIG. 3. As shown in FIG. 3, the image processing apparatus 10 includes a central processing unit (CPU) 20, a memory 21 as a temporary storage region, and a non-volatile storage unit 22. In addition, the image processing apparatus 10 includes a display 23 such as a liquid crystal display, an input device 24 such as a touch panel, a network interface (I/F) 25 connected to a network, and a camera 40. The CPU 20, the memory 21, the storage unit 22, the display 23, the input device 24, the network I/F 25, and the camera 40 are connected to a bus 27. The CPU 20 is an example of a processor according to the disclosed technology.

The storage unit 22 is realized by a hard disk drive (HDD), a solid state drive (SSD), a flash memory, or the like. An image processing program 30 is stored in the storage unit 22 as a storage medium. The CPU 20 reads out the image processing program 30 from the storage unit 22, loads the image processing program 30 into the memory 21, and executes the loaded image processing program 30.

In addition, the storage unit 22 stores first characteristic data 32, second characteristic data 34, and weighting coefficient data 36. The first characteristic data 32, the second characteristic data 34, and the weighting coefficient data 36 will be described in detail below.

The camera 40 comprises an image sensor such as a charge coupled device (CCD) image sensor or a complementary metal oxide semiconductor (CMOS) image sensor. The camera 40 images the color-developing member 90 and outputs a captured image obtained by the imaging to the CPU 20. A scanner may be used instead of the camera 40. That is, the capturing of the image here also includes reading with the scanner.

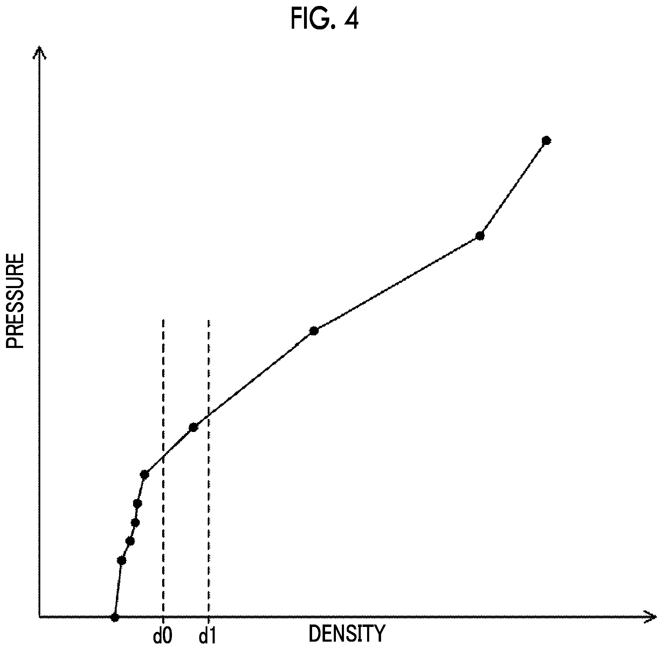

Next, a relationship between a pressure applied to the color-developing member 90 according to the present embodiment and a density of a color-developing portion in a captured image obtained by imaging the color-developing member 90 that has developed a color in response to the pressure will be described with reference to FIG. 4. In FIG. 4, a vertical axis represents the pressure and a horizontal axis represents the density. As shown in FIG. 4, there is a relationship between the density and the pressure, but, in a portion where the density is less than a density d0, the pressure increases steeply with respect to an increase in the density as compared with a portion where the density is equal to or greater than a density d1. Therefore, in a case where the density of the captured image is converted into a pressure value, in a case where the density includes an error, the error of the pressure value corresponding to the error of the density is larger in the portion where the density is less than the density d0 than in the portion where the density is equal to or greater than the density d1. In this case, the pressure applied to the color-developing member 90 cannot be accurately derived.

In addition, the color-developing member 90 according to the present embodiment has a characteristic that the graininess of the captured image is higher as the applied pressure is smaller in the portion where the density is less than the density d0. The graininess means a degree of roughness of an image. The image processing apparatus 10 according to the present embodiment has a function of deriving the pressure value applied to the color-developing member 90 using the first characteristic data 32, the second characteristic data 34, and the weighting coefficient data 36.

The first characteristic data 32 is data in which a relationship between the amount of energy applied to the color-developing member 90 and the graininess of the captured image obtained by imaging the color-developing member 90 is determined in advance. As the amount of energy, for example, a physical quantity corresponding to the energy that can be measured by using the color-developing member 90, such as the pressure value, can be appropriately employed.

The second characteristic data 34 is data in which a relationship between the amount of energy applied to the color-developing member 90 and the density of the color-developing member 90 in the captured image obtained by imaging the color-developing member 90 is determined in advance. As the amount of energy, for example, a physical quantity corresponding to the energy that can be measured by using the color-developing member 90, such as the pressure value, can be appropriately employed.

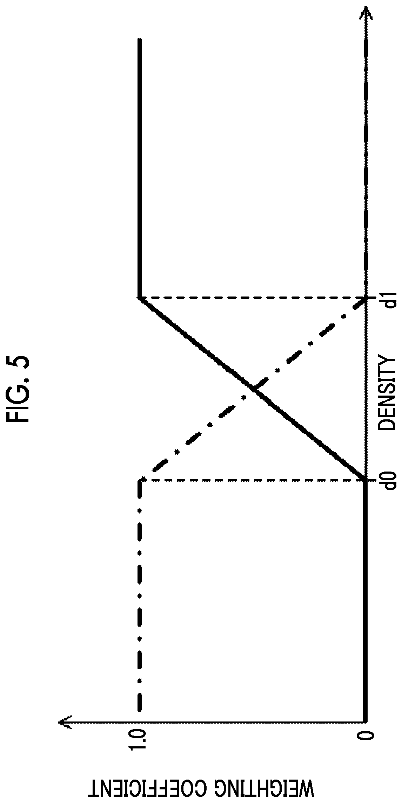

The weighting coefficient data 36 is data in which weighting coefficients used for weighting the first characteristic data 32 and the second characteristic data 34 are defined. FIG. 5 shows an example of the weighting coefficient data 36. In FIG. 5, a vertical axis represents the weighting coefficient and a horizontal axis represents the density. In addition, in FIG. 5, a one-dot chain line represents a weighting coefficient (hereinafter, referred to as a "first weighting coefficient") for the first characteristic data 32, and a solid line represents a weighting coefficient (hereinafter, referred to as a "second weighting coefficient") for the second characteristic data 34.

The first weighting coefficient is 1.0 in a case where the density is less than the density d0, is 0 in a case where the density is equal to or greater than the density d1, and decreases as the density increases in a case where the density is equal to or greater than the density d0 and less than the density d1. The second weighting coefficient is 0 in a case where the density is less than the density d0, is 1 in a case where the density is equal to or greater than the density d1, and increases as the density increases in a case where the density is equal to or greater than the density d0 and less than the density d1. That is, in a case where the density is less than the density d0, only the first characteristic data 32 is used, and, in a case where the density is equal to or greater than the density d1, only the second characteristic data 34 is used.

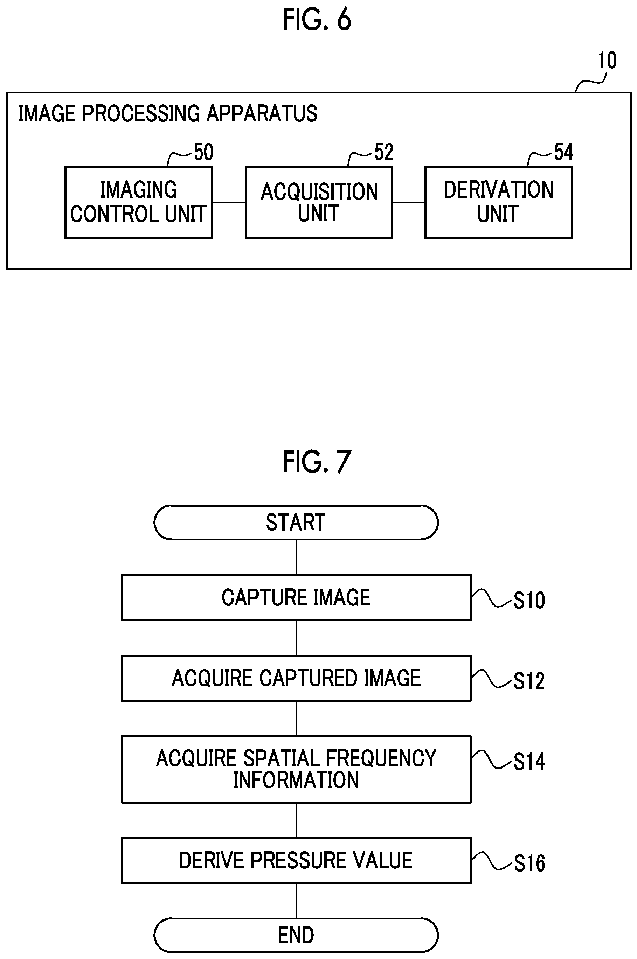

Next, a functional configuration of the image processing apparatus 10 according to the present embodiment will be described with reference to FIG. 6. As shown in FIG. 6, the image processing apparatus 10 includes an imaging control unit 50, an acquisition unit 52, and a derivation unit 54. The CPU 20 executes the image processing program 30 to function as the imaging control unit 50, the acquisition unit 52, and the derivation unit 54.

A user inputs an instruction to image the color-developing member 90 via the input device 24. In a case where the imaging instruction from the user is input, the imaging control unit 50 causes the camera 40 to capture an image of the color-developing member 90.

The acquisition unit 52 acquires a captured image obtained by imaging the color-developing member 90 under the control of the imaging control unit 50.

The derivation unit 54 acquires, from the captured image acquired by the acquisition unit 52, information (hereinafter, referred to as "spatial frequency information") corresponding to a spatial frequency in the captured image. Specifically, the derivation unit 54 acquires the spatial frequency information by applying a filter that transmits components having a spatial frequency equal to or greater than a certain value to the captured image. That is, the spatial frequency information according to the present embodiment is a component of the captured image having a spatial frequency equal to or greater than a certain value. In this case, a lower limit value of the spatial frequency to be extracted is determined in advance by an experiment or the like. The spatial frequency information obtained in this way represents the graininess of the image.

For example, the granular structure to be detected in the captured image according to the present embodiment has a diameter of 0.1 mm or more and less than 0.5 mm. In this case, the derivation unit 54 acquires the spatial frequency information by applying a filter capable of extracting components having a spatial frequency higher than 0.5 [cycle/mm] to the captured image.

For example, in a case where a resolution of the captured image is 300 [dots per inch (dpi)], the derivation unit 54 can use a Laplacian filter having a size of 3×3 pixels. The derivation unit 54 may use a spatial filter that reduces high-frequency components in order to distinguish between noise included in the captured image and the granular structure to be detected. For example, the derivation unit 54 can calculate a difference between a result of applying an average value filter having a size of 7×7 pixels to the captured image having a resolution of 300 [dpi] and a result of applying an average value filter having a size of 3×3 pixels to the captured image, whereby it is possible to achieve both the reduction of the noise and the extraction of the granular structure.

In addition, for example, the derivation unit 54 may apply an edge detection filter, such as a Prewitt filter, to the captured image. In this case, the derivation unit 54 can extract the granular structure by calculating a sum of absolute values of outputs of the Prewitt filters in a horizontal direction and a vertical direction in the captured image. The Prewitt filter may be, for example, a filter having a size of 5×5 pixels or more and 9×9 pixels or less.

The derivation unit 54 derives the pressure value applied to the color-developing member 90 based on the acquired spatial frequency information for a portion of the captured image where the density is less than a first threshold value. The first threshold value is, for example, the density d0 described above. Specifically, for pixels in the captured image whose density is less than the first threshold value, the derivation unit 54 derives the pressure value by converting the spatial frequency information into the pressure value using the first characteristic data 32.

In addition, for a portion of the captured image where the density is equal to or greater than a second threshold value that is greater than the first threshold value, the derivation unit 54 derives the pressure value applied to the color-developing member 90 based on the density. The second threshold value is, for example, the density d1 described above. Specifically, for pixels in the captured image whose density is equal to or greater than the second threshold value, the derivation unit 54 derives the pressure value by converting the density into the pressure value using the second characteristic data 34. The second threshold value may be equal to the first threshold value.

In addition, for a portion of the captured image where the density is equal to or greater than the first threshold value and less than the second threshold value, the derivation unit 54 derives the pressure value applied to the color-developing member 90 by combining a first pressure value derived based on the spatial frequency information and a second pressure value derived based on the density. Specifically, the derivation unit 54 derives the first pressure value by converting the spatial frequency information into the pressure value using the first characteristic data 32. In addition, the derivation unit 54 derives the second pressure value by converting the density into the pressure value using the second characteristic data 34. Then, the derivation unit 54 uses the weighting coefficient data 36 to weight the first pressure value with a first weighting coefficient that decreases as the density increases and weight the second pressure value with a second weighting coefficient that increases as the density increases. As a result, the derivation unit 54 combines the first pressure value and the second pressure value.

Next, an operation of the image processing apparatus 10 according to the present embodiment will be described with reference to FIG. 7. The CPU 20 executes the image processing program 30 to execute pressure measurement processing shown in FIG. 7. The pressure measurement processing shown in FIG. 7 is executed, for example, in a case where an imaging instruction is input by the user via the input device 24.

In step S10 of FIG. 7, the imaging control unit 50 causes the camera 40 to capture an image of the color-developing member 90. In step S12, the acquisition unit 52 acquires a captured image obtained by imaging the color-developing member 90 under the control in step S10.

In step S14, the derivation unit 54 acquires the spatial frequency information from the captured image acquired in step S12 as described above. In step S16, as described above, the derivation unit 54 derives the pressure value applied to the color-developing member 90 based on the spatial frequency information for the portion of the captured image where the density is less than the first threshold value. In addition, as described above, for the portion of the captured image where the density is equal to or greater than the second threshold value, the derivation unit 54 derives the pressure value applied to the color-developing member 90 based on the density. In addition, as described above, for the portion of the captured image where the density is equal to or greater than the first threshold value and less than the second threshold value, the derivation unit 54 derives the pressure value applied to the color-developing member 90 by combining the first pressure value derived based on the spatial frequency information and the second pressure value derived based on the density. In a case where the process of step S16 ends, the pressure measurement processing ends.

As described above, according to the present embodiment, the amount of energy applied to the color-developing member 90 can be accurately derived.

In the above-described embodiment, the camera 40 may capture the color-developing member 90 together with a patch image, in a state where a black patch image is disposed outside the color-developing member 90. In this case, the imaging control unit 50 may determine an in-focus state based on a contrast value of a portion of the patch image in the captured image captured by the camera 40. For example, in a case where a degree of blurriness of the captured image is within a range in which the degree of blurriness can be corrected, the imaging control unit 50 may perform correction on the captured image to reduce the degree of blurriness. In addition, for example, in a case where the degree of blurriness of the captured image is outside the range in which the degree of blurriness can be corrected, the imaging control unit 50 may display a message prompting the user to perform re-imaging on the display 23 to notify the user that re-imaging is required.

In addition, in the above-described embodiment, a case has been described in which the pressure is employed as the energy applied to the object, but the disclosed technology is not limited to this aspect. For example, a form may be employed in which heat or ultraviolet rays are employed as the energy applied to the object. In a case where heat is employed as the energy applied to the object, THERMOSCALE (product name) (manufactured by FUJIFILM Corporation) that develops a color according to the amount of heat can be used as the color-developing member 90. In addition, in a case where ultraviolet rays are employed as the energy applied to the object, UVSCALE (product name) (manufactured by FUJIFILM Corporation) that develops a color according to the amount of ultraviolet rays can be used as the color-developing member 90.

In addition, in the above-described embodiment, for example, various processors shown below can be used as a hardware structure of a processing unit that executes various kinds of processing, such as each functional unit of the image processing apparatus 10. The various processors include, as described above, in addition to a CPU, which is a general-purpose processor that functions as various processing units by executing software (program), a programmable logic device (PLD) that is a processor of which a circuit configuration may be changed after manufacture, such as a field programmable gate array (FPGA), and a dedicated electrical circuit which is a processor having a circuit configuration specially designed to execute specific processing, such as an application specific integrated circuit (ASIC).

One processing unit may be configured of one of the various processors, or may be configured of a combination of the same or different kinds of two or more processors (for example, a combination of a plurality of FPGAs or a combination of the CPU and the FPGA). In addition, a plurality of processing units may be configured of one processor.

As an example in which a plurality of processing units are configured of one processor, first, as typified by a computer such as a client or a server, there is an aspect in which one processor is configured of a combination of one or more CPUs and software, and this processor functions as a plurality of processing units. Second, as typified by a system on chip (SoC) or the like, there is an aspect in which a processor that implements functions of the entire system including the plurality of processing units on one integrated circuit (IC) chip is used. As described above, various processing units are configured by using one or more of the various processors as a hardware structure.

Further, as the hardware structure of the various processors, more specifically, an electric circuit (circuitry) in which circuit elements such as semiconductor elements are combined may be used.

In the above-described embodiment, an aspect has been described in which the image processing program 30 is stored (installed) in the storage unit 22 in advance, but the present disclosure is not limited to this. The image processing program 30 may be provided in an aspect in which the image processing program 30 is recorded in a recording medium, such as a compact disc read only memory (CD-ROM), a digital versatile disc read only memory (DVD-ROM), and a universal serial bus (USB) memory. In addition, the image processing program 30 may be downloaded from an external device via a network.

The disclosure of JP2023-144648 filed on September 6, 2023 is incorporated herein by reference in its entirety. In addition, all literatures, patent applications, and technical standards described herein are incorporated by reference to the same extent as if the individual literature, patent applications, and technical standards were specifically and individually stated to be incorporated by reference.

## Claims

1. An image processing apparatus comprising:
at least one processor,
wherein the processor is configured to
acquire information corresponding to a spatial frequency in a captured image obtained by imaging a color-developing member that develops a color with a density distribution according to an amount of applied energy, and
derive the amount of energy applied to the color-developing member based on the acquired information for a portion of the captured image where a density is less than a first threshold value.

2. The image processing apparatus according to claim 1,
wherein the processor is configured to derive, for a portion of the captured image where a density is equal to or greater than a second threshold value that is equal to or greater than the first threshold value, the amount of energy applied to the color-developing member based on the density.

3. The image processing apparatus according to claim 2,
wherein the second threshold value is greater than the first threshold value, and
for a portion of the captured image where a density is equal to or greater than the first threshold value and less than the second threshold value, the amount of energy applied to the color-developing member is derived by combining a first amount of energy derived based on the acquired information and a second amount of energy derived based on the density.

4. The image processing apparatus according to claim 3,
wherein, for the portion of the captured image where the density is equal to or greater than the first threshold value and less than the second threshold value, the first amount of energy and the second amount of energy are combined by weighting the first amount of energy with a weighting coefficient that decreases as the density increases and weighting the second amount of energy with a weighting coefficient that increases as the density increases.

5. The image processing apparatus according to any one of claims 1 to 4,
wherein the information corresponding to the spatial frequency in the captured image is a component of the captured image having a spatial frequency equal to or greater than a certain value.

6. An image processing method executed by a processor of an image processing apparatus, the image processing method comprising:
acquiring information corresponding to a spatial frequency in a captured image obtained by imaging a color-developing member that develops a color with a density distribution according to an amount of applied energy; and
deriving the amount of energy applied to the color-developing member based on the acquired information for a portion of the captured image where a density is less than a first threshold value.

7. An image processing program for causing a processor of an image processing apparatus to execute:
acquiring information corresponding to a spatial frequency in a captured image obtained by imaging a color-developing member that develops a color with a density distribution according to an amount of applied energy; and
deriving the amount of energy applied to the color-developing member based on the acquired information for a portion of the captured image where a density is less than a first threshold value.
